# EUROPEAN PATENT SPECIFICATION

(11) **EP 0 979 149 B1**
(45) Date of publication and mention of the grant of the patent: **13.11.2002**
(21) Application number: 97921492.1
(22) Date of filing: 01.05.1997
(51) Int. Cl.: B05B 7/06

(54) **SPRAY NOZZLE AND A PROCESS USING THIS NOZZLE**
SPRÜHDÜSE UND EIN ANWENDUNGSVERFAHREN
BUSE DE PULVERISATION ET PROCEDE D'UTILISATION DE LA BUSE

(43) Date of publication of application: 16.02.2000
(73) Proprietor: E.I. DUPONT DE NEMOURS AND COMPANY, Wilmington, Delaware 19898 (US)
(72) Inventor: KING, Joseph, Warren, Hendersonville, TN 37075 (US); MCCUTCHEN, Michael, Shawn, Kennett Square, PA 19348 (US)
(74) Representative: Jeffrey, Philip Michael
(86) International application number: US9707443
(87) International publication number: WO98050165

(56) References cited:
- DD-A- 272 422
- DE-A- 2 600 534
- GB-A- 2 038 468
- US-A- 2 712 961
- US-A- 3 261 664
- US-A- 3 717 306
- US-A- 4 066 424
- US-A- 4 826 084
- PATENT ABSTRACTS OF JAPAN vol. 004, no. 113 (C-021), 13 August 1980 & JP 55 073363 A (HITACHI LTD;OTHERS: 01), 3 June 1980,
- PATENT ABSTRACTS OF JAPAN vol. 005, no. 189 (M-099), 28 November 1981 & JP 56 108624 A (AGENCY OF IND SCIENCE & TECHNOL), 28 August 1981,

## Description

The present invention relates to a process for cooling chlorine gases.

Spray nozzles may be classified as pressure nozzles, rotating nozzles and gas-atomizing nozzles. Spray nozzles are used for atomizing a liquid into droplets and are well known in various applications. For example, U.S. Patent 3,717,306 describes a nozzle for mixing and spraying foam resin components and is made up of two concentric spray nozzle members defining a central path and a cylindrical path concentric to the central path. Communicating passages therein are arranged so that material in the nozzle is given a swirling motion for good mixing and then the mixture is discharged in a single spray cone.

A single spray nozzle can effectively spray over a limited flow range. For effective use of sprays in confined spaces, there is a need to spray over a broad flow range.

GB-A-2 038 468 discloses a method of cooling and moistening dust containing gases.

According to the present invention, there is provided a process for cooling chlorine gases as claimed in claim 1.

Various embodiments of the present invention will now be described, by way of example only, and with reference to the accompanying drawings in which:
Fig. 1A and Fig. 1C are a side view and top view, respectively, of a dual feed injector.
Fig. 1B is an end view of the dual feed injector.
Fig. 2 is a longitudinal cross sectional view of the dual feed injector.

The disclosed dual feed injector is uniquely capable of providing two streams of atomized fluid within a broad flow range for good contacting between a fluid discharged from the dual feed injector and a fluid in a vessel, pipe or the like. The dual feed injector is especially applicable for rapidly cooling an effluent gas stream in a confined space from about 800°C-1500°C down to about 200°C-550°C. Rapid cooling from about 900°C-1000°C down to about 450°C-550°C is preferred.

Illustrative of such a process is chlorinating ferrotitaniferous materials and separating titanium tetrachloride as described in greater detail in U.S. Patent 3,261,664 and U.S. Patent 4,066,424. Hot chlorination gases produced from the reaction are primarily titanium tetrachloride, ferric chloride and ferrous chloride. These gases are passed to a transfer duct whereby a single spray injection nozzle introduces a liquid coolant, e.g., liquid titanium tetrachloride to perform the essential step of contacting and cooling the hot chlorination gases to about 450°C - 500°C. The disclosed dual feed injector is an improvement over this single spray injection nozzle.

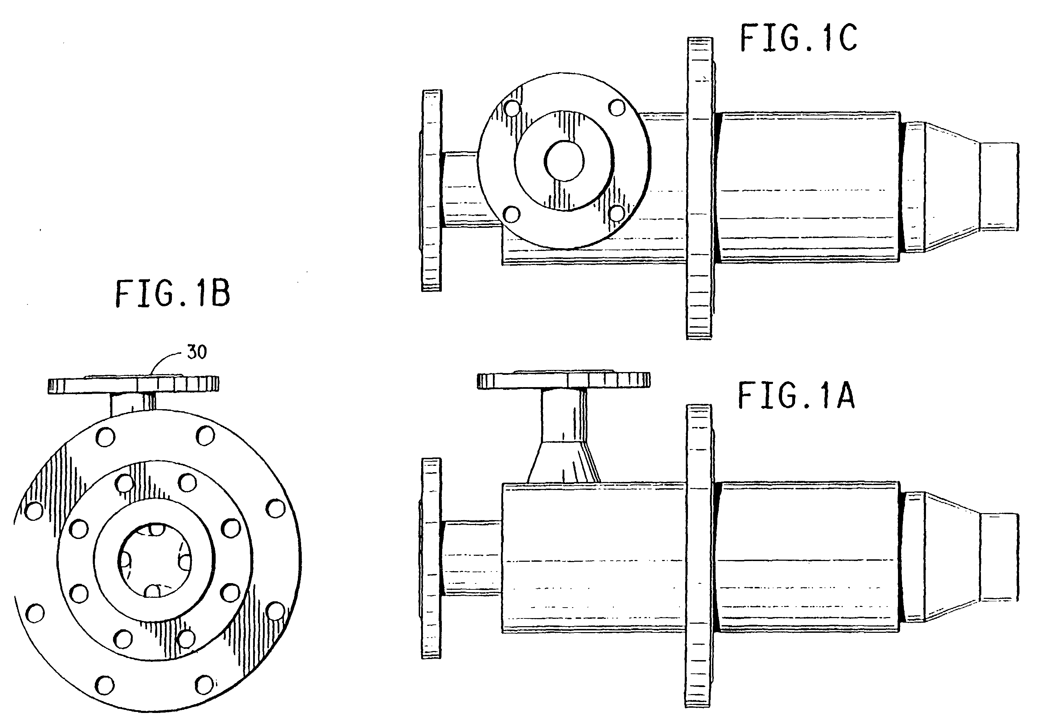

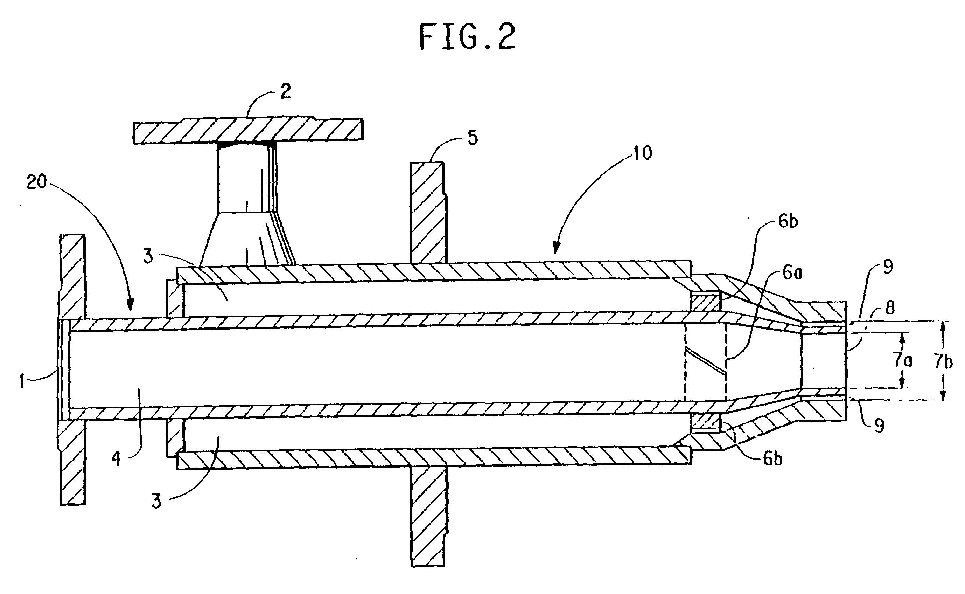

Referring now to Fig. 1B, the dual feed injector end view shows the tangential entry 30 of the fluid supplying the outer nozzle 10. The tangential entry 30 contributes to the flow and spray pattern of the fluid. It will be appreciated by those skilled in the art that depending upon the particular application, the entry can be tangential or concentric. Referring now to Fig. 2, the inner spray noaude 20 terminates with a central orifice 8 which discharges a full divergent cone spray. Full divergent cone spray is defined herein to refer to small particles or droplets forming a substantially whole conical region fanning outward. The outer spray nozzle 10 terminates with an annular orifice 9 which discharges a hollow divergent or convergent cone spray. Hollow divergent or convergent cone spray is defined herein to refer to small particles or droplets forming a ring shape around a perimeter of a circle fanning outward or merging towards the full divergent cone spray. The inner nozzle feed 1 and outer nozzle feed 2 are typically fed from different sources of the same liquid. The feed can be simultaneous or sequential. In an alternative embodiment the inner nozzle feed 1 and outer nozzle feed 2 may be fed from the same source or with different fluids. Further, two liquids may be contacted with a third liquid and slurries or pastes can be extruded through the outer spray nozzle for contact or treatment with other fluids. The dual feed injector can be used for many processes or purposes, including but not limited to, atomizing. cooling, heating, chemically reacting, mixing, evaporating, spray drying, contacting or treating. Combinations of the foregoing can be used.

Upstream from a mounting flange 5, the fluid then enters a concentric or tangential outer fluid supply line 3 supplied from outer nozzle feed 2 and a concentric or tangential inner fluid supply line 4 supplied from inner nozzle feed 1. For industrial applications or processes, the fluid flow ranges and pressure ranges can be readily determined for the desired application or process. For example, in cooling an effluent gas stream, the fluid flow range in the inner nozzle can be a high flow range, e.g., about 100 to about 600 gallons per minute (378 - 2271 litres per minute) at a pressure of about 1 to about 90 psig (6.895 - 620.55 kPa). The outer nozzle can be a low flow range, e.g., bout 20 to about 200 gallons per minute (76-757 litres per minute) at a pressure of about 1 to about 60 psig (6.895 - 413.7 kPa). The outer fluid supply line 3 and the inner fluid supply line 4 communicates with a means for determining an angle of the spray 6a, 6b, 7a and 7b. For example, stationary turning vanes 6a and 6b can provide a swirling motion. The swirl of the fluid in turn and, in conjunction with a decreased diameter 7a and 7b near the terminating end of the inner and outer nozzles, determine the angle of the spray. Spray angle may range from about 10 to about 90 degrees but may be selected based on the particular application with 15, 30 and 60 degrees being common. When the confined space is a relatively narrow pipe, the angle of the spray should be minimized if it is desirable to virtually avoid the spray impinging on the pipe wall. The direction of the jet of fluid can be at any angle relative to the direction of flow of the gaseous mixture, e.g., counter current or cocurrent. Counter current flow is preferred in cooling an effluent gas since it promotes rapid cooling and complete evaporation of the liquid coolant. Near the terminating end, the inner nozzle diameter 7a and the outer nozzle diameter 7b decrease and the volume available for the fluid flow also decreases. The change in the available volume also provides the energy needed to atomize the fluid, or break it up into many small particles or droplets. It has been observed that smaller particles or droplets provide better contacting when cooling an effluent gas. The dual feed injector can be designed for any given droplet size. In a process for cooling an effluent gas stream, it may be desirable for the mean liquid spray droplet diameter to be in the range of about 0.2 to 20 mm. It will be appreciated by those skilled in the art that depending upon the different industrial application or fluid being fed through the dual feed injector that operating parameters, vane configuration and dimensions may be readily determined by constructing a model dual feed injector and testing the operating parameters, vane configuration and dimensions for the desired flow range and spray pattern. By way of example and not limitation, the dimensions suitable for cooling an effluent gas can be an overall length of about 26" long (66 cm). The overall height can be about 15.25" (39 cm). The upstream inner diameter of the outer nozzle can be about 5.75" (14.6 cm) and the upstream inner diameter of the inner nozzle can be about 2.9" (7.4 cm). The diameter then reduces near the terminal end wherein the reduced diameter 7a of the inner nozzle can be about 1.5" (3.8 cm). The reduced diameter 7b of the outer nozzle can be about 2.2" (5.6 cm) and the width of the annular orifice can be about 0.3" (0.8 cm).

The dual feed injector can be constructed of any material that is suitable for the fluid being fed through it. Typically, a stainless steel alloy will be appropriate for most applications but a more corrosion resistant material such as Hastelloy® can be used.

A greater efficiency and process flexibility is provided than found in conventional spray nozzles and has wide applications. The dual feed injector combines compactness with the ability to produce an excellent spray pattern over a much larger range of flow rates than a conventional nozzle.

The terms and expressions which have been employed are used as terms of description and not of limitation, and there is no intention in the use of such terms and expressions of excluding any equivalent of the features shown and described or any portion thereof, but it is recognized that various modifications are possible within the scope of the appended claims.

## Claims

1. A process for cooling chlorine gases produced from reacting ferrotitaniferous materials with chlorine, comprising the steps of:
(a) injecting a first cooling fluid through an outer spray nozzle (10) in a dual feed injector to contact the chlorine gases, wherein the nozzle has an outer fluid supply line (3) communicating with a means for providing a spray angle, said nozzle terminating with an annular orifice (9) having a smaller diameter than the fluid supply line for atomizins a fluid; and
(b) injecting a second cooling fluid through an inner spray nozzle (20) in the dual feed injector to contact the chlorine gases, wherein the nozzle has an inner fluid supply line (4) communicating with a means for providing a spray angle, said nozzle terminating with a central orifice (8) having a smaller diameter than the inner fluid supply line for atomizing a fluid; wherein said inner and outer nozzles are disposed concentric to each other and housed in a compact nozzle body,
**characterised in that** said first cooling fluid is injected at a flow rate in the range of about 20 to about 200 gallons per minute (76 - 757 litres per minute) and pressure of about 1 to about 60 psig (6.895 - 413.7 kPa) and **in that** said second cooling fluid is injected at a flow rate in the range of about 100 to about 600 gallons per minute (378 - 2271 litres per minute) and pressure of about 1 to about 90 psig (6.895 - 620.55 kPa).

2. The process of claim 1, wherein the cooling fluid is a liquid having a mean droplet diameter size in the range of about 0.2 to about 20 mm.

3. The process of claim 1 or 2, wherein the cooling fluids cool the chlorine gases from a temperature in the range of 800°C to 1500°C to a temperature in the range of 200°C to 550°C.

4. The process of claims 2 or 3, wherein the first and/or second cooling fluid is titanium tertrachloride.

5. The process of claims 1, 2 or 3, wherein said first and second cooling fluids are the same liquid.

6. The process of claims 1, 2 or 3, wherein said first and second cooling fluids are different fluids.

## Patentansprüche

1. Verfahren für das Abkühlen von Chlorgasen, die bei der Reaktion von ferrotitanhaltigen Materialien mit Chlor erzeugt werden, das die folgenden Schritte aufweist:
(a) Einspritzen eines ersten Kühlfluids durch eine äußere Sprühdüse (10) in einer Einspritzdüse mit doppelter Zuführung, um mit den Chlorgasen in Kontakt zu kommen, worin die Düse eine äußere Fluidzuführleitung (3) aufweist, die mit einer Einrichtung für das Bewirken eines Sprühwinkels verbunden ist, wobei die Düse mit einer ringförmigen Öffnung (9) endet, die einen kleineren Durchmesser aufweist als die Fluidzuführleitung, um ein Fluid zu zerstäuben; und
(b) Einspritzen eines zweiten Kühlfluids durch eine innere Sprühdüse (20) in einer Einspritzdüse mit doppelter Zuführung, um mit den Chlorgasen in Kontakt zu kommen, worin die Düse eine innere Fluidzuführleitung (4) aufweist, die mit einer Einrichtung für das Bewirken eines Sprühwinkels verbunden ist, wobei die Düse mit einer mittleren Öffnung (8) endet, die einen kleineren Durchmesser aufweist als die innere Fluidzuführleitung, um ein Fluid zu zerstäuben; worin die innere und die äußere Düse konzentrisch zueinander angeordnet sind und in einem kompakten Düsenkörper aufgenommen werden,
**dadurch gekennzeichnet, daß** das erste Kühlfluid mit einer Strömungsgeschwindigkeit im Bereich von etwa 20 bis etwa 200 Gallonen pro Minute (76 - 757 Liter pro Minute) und einem Druck von etwa 1 bis etwa 60 psig (6,895 - 413,7 kPa) eingespritzt wird, und daß das zweite Kühlfluid mit einer Strömungsgeschwindigkeit im Bereich von etwa 100 bis etwa 600 Gallonen pro Minute (378 - 2271 Liter pro Minute) und einem Druck von etwa 1 bis 90 psig (6,895 - 620,55 kPa) eingespritzt wird.

2. Verfahren nach Anspruch 1, bei dem das Kühlfluid eine Flüssigkeit ist, die eine mittlere Tröpfchendurchmessergröße im Bereich von etwa 0,2 bis etwa 20 mm aufweist.

3. Verfahren nach Anspruch 1 oder 2, bei dem die Kühlfluids die Chlorgase von einer Temperatur im Bereich von 800°C bis 1500°C auf eine Temperatur im Bereich von 200°C bis 550°C abkühlen.

4. Verfahren nach Anspruch 1, 2 oder 3, bei dem das erste und/oder zweite Kühlfluid Titantetrachlorid ist.

5. Verfahren nach Anspruch 1, 2 oder 3, bei dem das erste und zweite Kühlfluid die gleiche Flüssigkeit sind.

6. Verfahren nach Anspruch 1, 2 oder 3, bei dem das erste und zweite Kühlfluid unterschiedliche Fluids sind.

## Revendications

1. Procédé de refroidissement de gaz chlorés produits par la réaction de substances ferro-titanifères avec du chlore, comprenant les étapes consistant à:
(a) injecter un premier fluide de refroidissement à travers une buse de pulvérisation extérieure (10) dans un injecteur à double alimentation pour le mettre en contact avec les gaz chlorés, la buse comportant une ligne d'alimentation en fluide extérieure (3) communiquant avec un moyen pour créer un angle de pulvérisation, ladite buse se terminant par un orifice annulaire (9) présentant un diamètre inférieur à celui de la ligne d'alimentation en fluide pour atomiser un fluide; et
(b) injecter un deuxième fluide de refroidissement à travers une buse de pulvérisation intérieure (20) dans l'injecteur à double alimentation pour le mettre en contact avec les gaz chlorés, la buse comportant une ligne d'alimentation en fluide intérieure (4) communiquant avec un moyen pour créer un angle de pulvérisation, ladite buse se terminant par un orifice central (8) présentant un diamètre inférieur à celui de la ligne d'alimentation en fluide intérieure pour atomiser un fluide; dans lequel lesdites buses intérieure et extérieure sont disposées de manière concentrique l'une par rapport à l'autre et sont logées dans un corps de buse compact,
**caractérisé en ce que** ledit premier fluide de refroidissement est injecté à un débit compris entre environ 20 et environ 200 gallons par minute (de 76 à 757 litres par minute) et à une pression d'environ 1 à environ 60 psig (de 6,895 à 413,7 kPa) et **en ce que** ledit deuxième fluide de refroidissement est injecté à un débit compris entre environ 100 et environ 600 gallons par minute (de 378 à 2271 litres par minute) et à une pression d'environ 1 environ 90 psig (de 6,895 à 620,55 kPa).

2. Procédé selon la revendication 1, dans lequel le fluide de refroidissement est un liquide ayant un diamètre de gouttelette moyen compris entre environ 0,2 et environ 20 mm.

3. Procédé selon la revendication 1 ou 2, dans lequel les fluides de refroidissement refroidissent les gaz chlorés depuis une température comprise entre 800°C et 1500°C à une température comprise entre 200°C et 550°C.

4. Procédé selon les revendications 1, 2 ou 3, dans lequel le premier et/ou le deuxième fluide(s) de refroidissement est ou sont du tétrachlorure de titane.

5. Procédé selon les revendications 1, 2 ou 3, dans lequel ledit premier et ledit deuxième fluides de refroidissement sont le même liquide.

6. Procédé selon les revendications 1, 2 ou 3, dans lequel ledit premier et ledit deuxième fluides de refroidissement sont des fluides différents.
